# EUROPEAN PATENT SPECIFICATION

(11) **EP 1 299 856 B1**
(45) Date of publication and mention of the grant of the patent: **15.04.2009**
(21) Application number: 01951835.6
(22) Date of filing: 09.07.2001
(51) Int. Cl.: G06K 19/077, G06K 19/04

(54) **TRANSPARENT DATA CARD**
DURCHSICHTIGE DATENKARTE
CARTE DE DONNEES TRANSPARENTE

(30) Priority: 07.07.2000 FR 0008875
(43) Date of publication of application: 09.04.2003
(73) Proprietor: Gemalto SA, 92190 Meudon (FR)
(72) Inventor: EL YAMANI, Hayat (Schlumberger Sema), F-92542 Montrouge Cedex (FR); LIMELETTE, Yann (Schlumberger Sema), F-92542 Montrouge Cedex (FR); PERBEN, Cédric, 92542 Montrouge Cedex (FR)
(74) Representative: Cassagne, Philippe M.J.
(86) International application number: PCT/IB2001/001219
(87) International publication number: WO 2002/005204

(56) References cited:
- EP-A- 0 343 829
- US-A- 5 010 243
- US-A- 5 832 556
- PATENT ABSTRACTS OF JAPAN vol. 1998, no. 05, 30 April 1998 (1998-04-30) & JP 10 003524 A (DAINIPPON PRINTING CO LTD), 6 January 1998 (1998-01-06)

## Description

### FIELD OF THE INVENTION

The present invention relates to a data card, such as a card having a magnetic track or an integrated circuit. Such data cards are used for example, as credit or phone cards, or else, as identification or access cards, and the like.

### BACKGROUND OF THE INVENTION

Data cards generally comprise a card body made of a thermoplastic material which is opaque to electromagnetic radiation having wavelengths in the visible range, that is between about 400 and 800 nm. These cards also comprise a data storage medium such as a magnetic track or an integrated circuit in which data can be recorded or from which data can be read by means of a known type of reader.

### SUMMARY OF THE INVENTION

It is an object of the invention to provide a data card that is aesthetically appealing and that can be used in a wide range of applications.

To that end, the invention provides a data card as defined in claim 1.

The invention allows a data card that is perceived by the human eye as being transparent. Transparent data cards may appeal to numerous customers for aesthetic reasons. The transparency of a data card can thus be a selling feature.

However, a reader detects the presence of a card either mechanically through contact or optically because the card blocks a light beam emitted by the reader. Cards made of a transparent material can normally only be detected mechanically by means of a feeler pin. Therefore, they are presently unusable in readers with optical detection, so that their use is restricted to small-scale applications only implemented by means of readers of the mechanical detection type.

US 3,536,894 describes a credit card comprising a center layer sandwiched between two rigid outer layers that are translucent to visible and infrared radiations. The center layer is made with a material, which is transparent to light or radiation in the visible spectrum but opaque to infrared radiations. However, this document only describes cellophane as being the material used for the center layer. Such a material is not well appropriate for the manufacturing of data cards.

In accordance with the invention, the card body comprises a filter layer having substantially the same dimensions in terms of length and width as the card body, the filter layer comprising a silver-based sub-layer that is sandwiched between two anti-reflection sub-layers, the filter layer being substantially transparent to electromagnetic radiation in a wavelength range that comprises electromagnetic radiation perceptible by the human eye, the filter layer being substantially opaque to electromagnetic radiation in another wavelength range associated with infrared radiation.

Thus, a data card in accordance with the invention can be detected optically by radiating electromagnetic radiation of the appropriate wavelength towards the card body, which is opaque to such radiation. A further advantage is that a data card in accordance to the invention can be used in a great variety of readers that optically detect the presence of a card. The position of the light beam for detecting the card may vary from one reader to another. In accordance with the invention, the filter layer has dimensions that substantially correspond to those of the card body, in terms of length and width. Consequently, a card in accordance with the invention will be detected irrespective of the position of the light beam in the reader concerned.
Preferably, the filter layer is opaque to electromagnetic radiation of a wavelength substantially ranging from 800 to 1000 nm. Preferably, the filter layer comprises at least one silver-based sub-layer and one antireflection sub-layer for electromagnetic radiation in the visible range, the antireflection layer being advantageously made from titanium oxide.

Other features and advantages of the invention will become apparent from the following description of a nonlimiting particular embodiment of the present invention.

### DETAILED DESCRIPTION

Reference will be made to the only appended figure, which shows a schematic cross-section of the card body according to the present invention.

Referring to this figure, the card according to the invention comprises a card body generally shown by reference 1, which, herein, includes a plurality of layers made of materials transparent to electromagnetic radiation of a wavelength in the visible range.

Card body 1 thus comprises a core layer 2 made, for example, of polyethylene or polyvinyl chloride and has two opposing faces 2.1.and 2.2.

Over face 2.1 of layer core 2 extends a decorative layer 3 covered with a protection coating 4.

Decorative layer 3 is for example made of polyvinyl chloride, acrylonitrile-butadiene-styrene, or polycarbonate and is deposited in a way known per se, by OFFSET printing of screen-printing.

The protection coating 4 is made, for example, by depositing a resin varnish through an offset or a screen printing, or by laminating a polyvinyl chloride sheet.

On top of face 2.2 of core layer 2, extends a filter layer 5 which is opaque to an electromagnetic radiation having a wavelength outside the visible range and, more specifically, to an electromagnetic radiation having a wavelength within the near infrared range, namely between about 800 and 1000 nm. The filter layer 5 layer has the same dimensions as those of the card body in terms of length and width. That is, the filter layer has a main surface whose dimensions substantially correspond to those of a main surface of the card body.

Filter layer 5 comprises a silver-based sub-layer 6 provided between two antireflection sub-layers 7 for visible electromagnetic radiation. Here, each antireflection sub-layer is made from titanium oxide. Antireflection sub-layers can also be made from other types of metal oxide. Filter layer 5 is vacuum deposited over core layer 2 by cold sputtering of the various sub-layers 6, 7, one by one. Filter layer 5 has a thickness of the order of 100 nm and silver-based sub-layer 6 has a thickness of the order of 10 nm. The thickness of the various sub-layers are preferably adjusted so that filter layer provides a minimum transmission of the order of 50 to 60 %, or even 70 %, of the electromagnetic radiation in the visible range and a maximum transmission of 10 % of the electromagnetic radiation in the near infrared range.

A decorative layer 8 is affixed to filter layer 5 by means of an adhesive layer 9. Decorative layer 8 is made of the same material and in the same way as decorative layer 3. Adhesive layer 9 improves the fixation strength of adhesive layer 8 to filter layer 5 whose adhesion properties are lower than those of core layer 2.

Decorative layer 8 is covered with a protection coating 10 made of the same material and in the same way as protection coating 4.

Of course, the present invention is not restricted to the above-described embodiment and variations can be made within the scope of the present invention as defined by the appended claims.

In particular, the number of silver-based sub-layers and antireflection sub-layers can be changed in order to increase or decrease the capability of the filter layer to transmit electromagnetic radiation. Generally, the filter layer will comprise N silver-based sub-layers and N+1 antireflection sub-layers, N being an integer greater than zero (N=1,2,3,4, ...).

In addition, other materials can be used for making the sub-layers in the filter layer. The choice of such materials will depend in particular on the desired electromagnetic radiation transmission capability, on the wavelength range to which filter layer 5 should be opaque. In this respect, the card body may comprise a filter layer opaque to electromagnetic radiation in the ultraviolet and far-infrared ranges, and the like. Another aspect concerns the adhesion properties of the various materials making up the filter layer, both between each other and with adjacent layers in the card body.

The filter layer may be transparent to electromagnetic radiation in a wavelength range that covers only a portion of the wavelength range of human vision (between 400 and 800 nm). For example, the filter layer may pass electromagnetic radiation in a range between 400 and 600 nm, in which case the transparency will have a certain color. The filter layer concerned may block electromagnetic radiation in a range between, for example, 700 and 900 nm. Thus, an electromagnetic radiation having a wavelength of 750 nm, which is perceptible by the human eye, can be used for optically detecting the presence of a card.

Finally, it should be noted that the filter layer may constitute the card body (a single layer structure). Layers other than the filter layer, if any, can be composed of materials different from that the materials used in the above-described embodiment. All what matters is that these layers are transparent to a certain extent so that the data card is perceived by the human eye as transparent with or without a certain coloring.

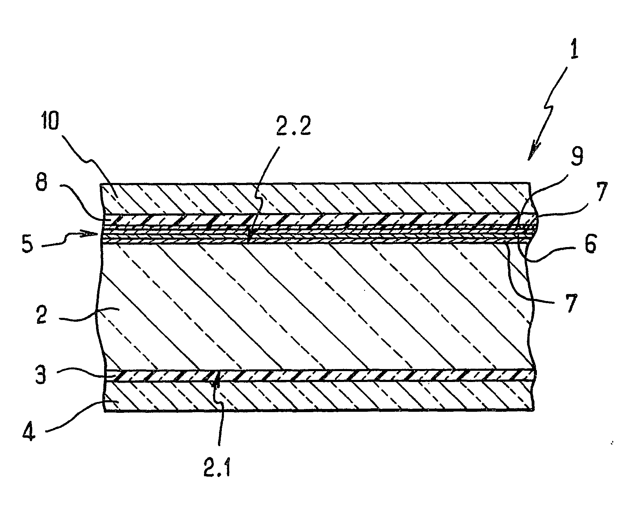

## Claims

1. A data card comprising a data storage medium embedded in a card body, the card body comprising a filter layer (5) having substantially the same dimensions in terms of length and width as the card body, the filter layer being substantially transparent to electromagnetic radiation in a wavelength range that comprises electromagnetic radiation perceptible by the human eye, the filter layer being substantially opaque to electromagnetic radiation in another wavelength range associated with infrared radiation, **characterized in that** said filter layer comprises a silver-based sub-layer (6) that is sandwiched between two antireflection sub-layers (7).

2. A card according to claim 1, **characterized in that** the antireflection sub-layer (7) is made from titanium oxide.

3. A card according to claim 1, **characterized in that** the filter layer (5) has a thickness comprised in the range between 150 nm and 250 nm.

4. A card according to claim 1, **characterized in that** the silver-based sub-layer (6) has a thickness of comprised in a range between 5 and 15 nm.

## Patentansprüche

1. Eine Datenkarte, die ein im Kartenkörper eingebettetes Datenspeichermedium enthält; der Kartenkörper enthält eine Filterschicht (5), die im Wesentlichen die gleichen Abmessungen bezüglich Länge und Breite wie der Kartenkörper aufweist, <kennzeichnend für die besagte Filterschicht ist eine darin enthaltene Teilschicht auf Silberbasis (6), die zwischen zwei Antireflexschichten (7) eingeschlossen ist>, die Filterschicht ist im Wesentlichen für elektromagnetische Strahlung im für den Menschen sichtbaren Wellenlängenbereich durchlässig; die Filterschicht ist im Wesentlichen für elektromagnetische Strahlung eines anderen Wellenlängenbereichs (Infrarotstrahlung) undurchlässig.

2. Eine Karte gemäß Anspruch 1, **gekennzeichnet dadurch, dass** die Antireflexschicht (7) aus Titanoxid besteht.

3. Eine Karte gemäß Anspruch 1, **gekennzeichnet dadurch, dass** die Filterschicht (5) eine Stärke im Bereich zwischen 150 nm und 250 nm aufweist.

4. Eine Karte gemäß Anspruch 1, **gekennzeichnet dadurch, dass** die Teilschicht auf Silberbasis (6) eine Stärke im Bereich zwischen 5 nm und 15 nm aufweist.

## Revendications

1. Une carte de données comprenant un support de stockage intégré dans le corps de carte, le corps de carte comprenant une couche filtrante (5) présentant en substance les mêmes dimensions que le corps de carte en termes de longueur et de largeur, la couche filtrante étant essentiellement transparente au rayonnement électromagnétique sur une plage de longueurs d'onde incluant un rayonnement électromagnétique perceptible par l'oeil humain, la couche filtrante étant substantiellement opaque au rayonnement électromagnétique sur une autre plage de longueurs d'onde associée à un rayonnement infrarouge, **caractérisée en ce que** ladite couche filtrante comprend une sous-couche à base d'argent (6) placée en sandwich entre deux sous-couches antireflet (7).

2. Une carte conformément à la revendication 1, **caractérisée en ce que** la sous-couche antireflet (7) est constituée de dioxyde de titane.

3. Une carte conformément à la revendication 1, **caractérisée en ce que** la couche filtrante (5) présente une épaisseur comprise entre 150 nm et 250 nm.

4. Une carte conformément à la revendication 1, **caractérisée en ce que** la sous-couche à base d'argent (6) présente une épaisseur comprise entre 5 nm et 15 nm.
